# EUROPEAN PATENT SPECIFICATION

(11) **EP 0 623 076 B1**
(45) Date of publication and mention of the grant of the patent: **29.05.1996**
(21) Application number: 93914538.9
(22) Date of filing: 28.01.1993
(51) Int. Cl.: B60D 1/52

(54) **PULLING HOOK**
ZUGHAKEN
CROCHET DE TIRAGE

(30) Priority: 29.01.1992 FI 920388
(43) Date of publication of application: 09.11.1994
(73) Proprietor: KOVIL OY, SF-57200 Savonlinna (FI)
(72) Inventor: FORSS, Harri, SF-57200 Savonlinna (FI)
(74) Representative: Weitzel, Wolfgang, Dr.-Ing.
(86) International application number: FI9300025
(87) International publication number: WO9314948

(56) References cited:
- EP-A- 0 160 934
- EP-A- 0 301 153
- EP-A- 0 455 251
- DE-A- 1 630 928
- FI-B- 74 657
- US-A- 2 639 160

## Description

The present invention relates to a pulling hook for pulling caravans, trailers or the like, said pulling hook being provided with locking means for removably fastening the actual hook member to a pulling hook hitching means, which in turn is secured to a pulling vehicle, the actual hook member including a connecting means which is adapted to at least partially overlap the hitching means, whereby the overlapping portions of the hook member and hitching means are provided with abutting faces for limiting the relative movement thereof and also provided is a quick coupling means for bringing the abutting faces of the overlapping portions to press against each other and for bringing the overlapping portions to lock removably relative to each other, said quick coupling means comprising an axle stub, journalled to be rotatable transversely relative to the common centre axis of the connecting means and hitching means and provided in a certain rotational zone of the quick coupling means with a recess as well as in another rotational zone of the quick coupling means with an eccentric surface whereby, in a certain rotational position of the quick coupling means, the connecting means and hitching means can be threaded in an overlapping position past the quick coupling means whereafter, upon rotating the quick coupling means, the abutting faces of the hook member connecting means and hitching means are pressed against each other for locking said means relative to each other.

The Applicants' earlier Finnish Patent 74657 discloses a disengageable pulling hook which, however, requires relatively strict limitations for manufacturing tolerances and, thus, manufacturing of such pulling hook is relatively expensive. The structural costs in this prior known solution are also increased by the fact that the moving components of the pulling hook are included in a portion of the pulling hook permanently mounted on a vehicle and this, in turn, requires certain protective precautions for securing the continuous operation of these components.

An object of the invention is to provide a pulling hook, wherein the actual hook member is adapted in a simple and quick fashion - without separate tools - to be uncoupled and coupled and which pulling hook, in order to keep manufacturing costs low, can be produced with relatively loose manufacturing tolerances and which hook also includes all moving parts in the removable portion of the pulling hook and, thus, when the hook is removed and stored e.g. in the trunk of an automobile, said moving parts shall not be subjected to any major stresses nor exposed to mud or other foreign matter.

This object is achieved according to the invention in a manner that and a pulling hook of the invention is characterized in that a quick coupling means is journalled to a hook member connecting means, that a hitching means is provided with a slot, extending transversely relative to its longitudinal axis and intended for an eccentric surface included in the quick coupling means, said slot preferably comprising a section of a circular cylinder, that the abutting faces of a hook member comprise a conical surface included in the mouth of a hole made in the connecting member for the hitching member and a section of the wall surface of said hole and, respectively, the abutting faces of a hitching means comprise a conical surface provided on the base of a hitching means protrusion extending into the interior of a connecting means and a section of the wall surface of said protrusion, and that the relative positioning and dimensioning of quick coupling means and slot are arranged in a manner that tightening of the quick coupling means produces on the hook member a force which presses the abutting faces of the hook member respectively against those of the hitching means.

The preferred further developments of the invention are set forth in the sub-claims.

The invention will now be described in more detail with reference made to the accompanying drawings, in which
- fig. 1: is a partially sectioned side view, showing the actual hook member of a pulling hook of the invention.
- Fig. 2A: is a side view, showing a hitching means mounted on a vehicle and included in a pulling hook of the invention.
- Fig. 2B: is a plan view, showing a hitching means mounted on a vehicle and included in a pulling hook of the invention.
- Fig. 2C: is a front view, showing a hitching means mounted on a vehicle and included in a pulling hook of the invention.
- Fig. 3A: is a side view, showing a quick coupling means for a pulling hook of the invention.
- Fig. 3B: is a section along a line III-III in fig. 3A.
- Fig. 4: is a partially sectioned side view of a pulling hook of the invention with the actual hook member coupled to the hitching means.
- Fig. 5: is a plan view, showing a pulling hook of the invention with the actual hook member coupled to the hitching means.
- Fig. 6: is a side view, showing a pulling hook of the invention with the actual hook member coupled to the hitching means.

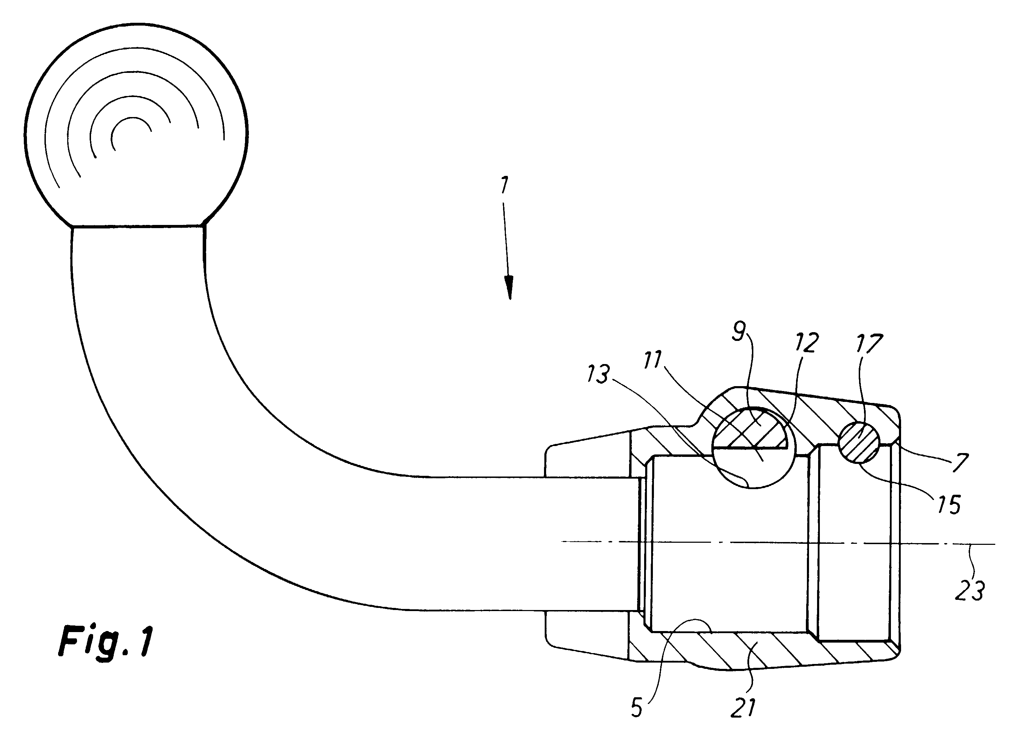

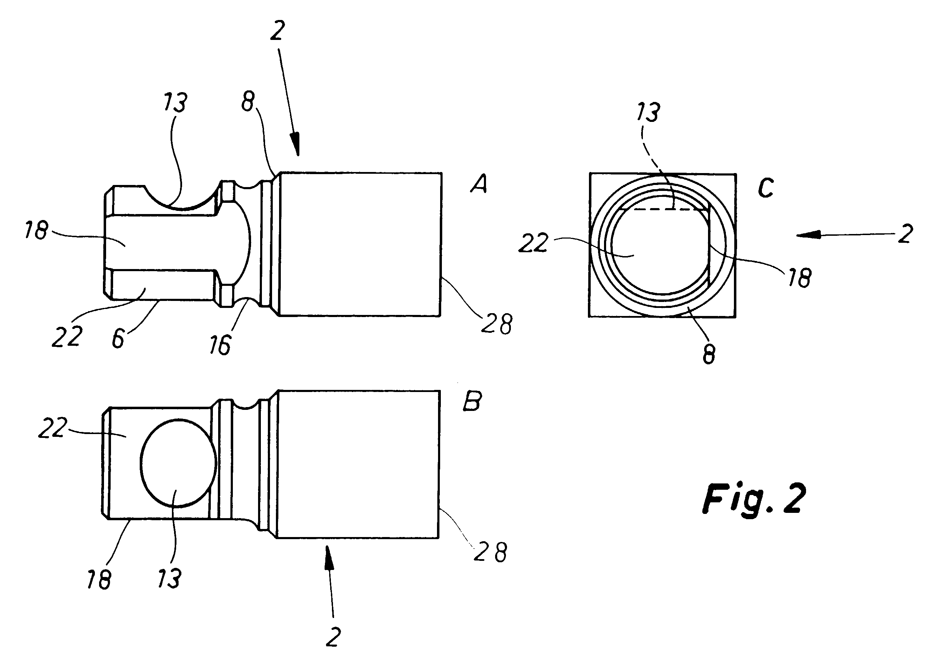

The invention relates to a pulling hook intended for pulling caravans, trailers or the like. In principle, the pulling hook comprises two components: a removable hook member, designated generally with reference numeral 1 in fig. 1, as well as a hitching means, designated generally with reference numeral 2 in fig. 2 and fastened in a conventional manner, e.g. by welding, by its end shown at reference numeral 28 to a pulling vehicle or a support member (not shown) mounted thereon.

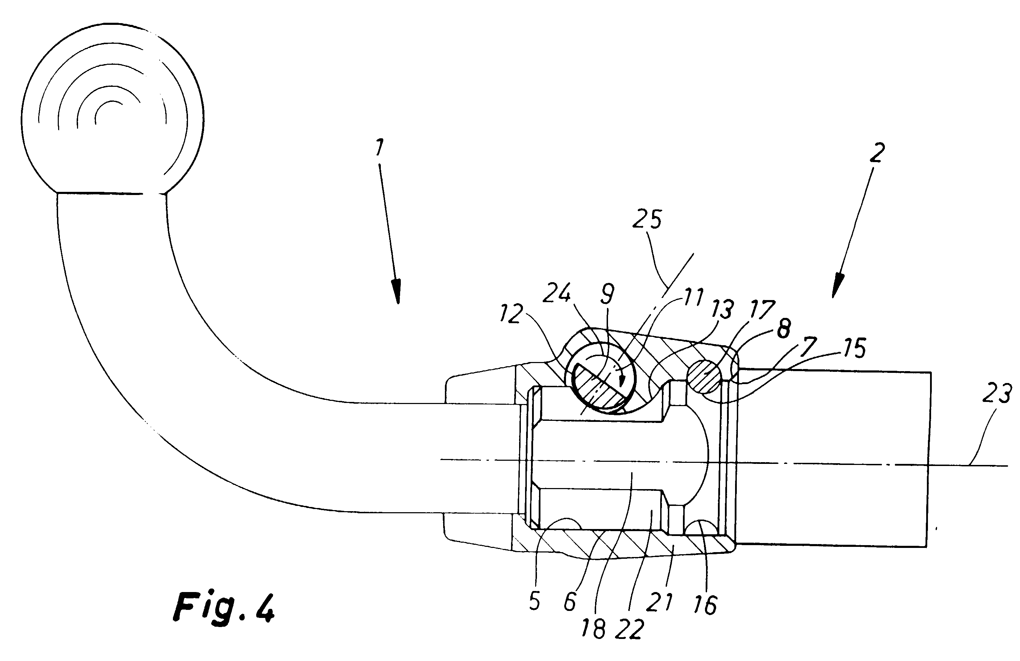

A connecting means 21, included in the actual hook member 1 and fastened to the hook member with a welding seam 29, is adapted to at least partially overlap the hitching means 2, as best illustrated in fig. 4. The connecting means 21 is preferably made as a piece of die forging.

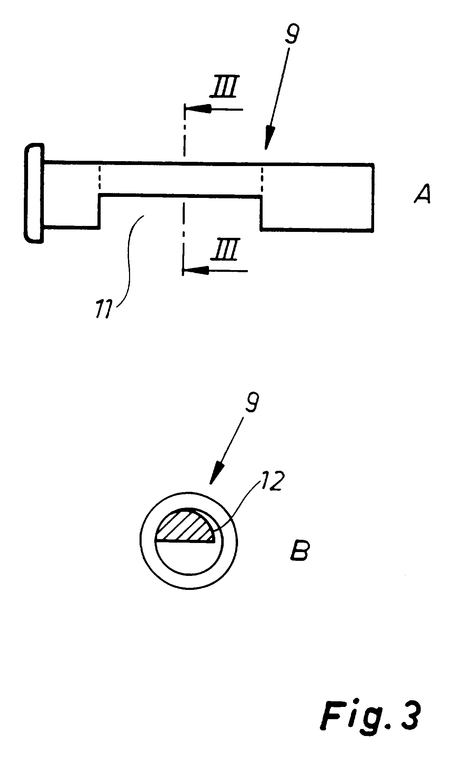

The actual hook member 1 and the connecting means 2 are locked relative to each other by means of a quick coupling means 9, said quick coupling means being separately shown in fig. 3.

The quick coupling means 9 comprises an axle stub, journalled to be rotatable transversely relative to the common centre axis 23 of connecting means 21 and hitching means 2. The quick coupling means 9 is journalled in a per se known manner to the connecting means 21 of hook member 1. In alignment with said axis 23 the quick coupling means 9 is provided in a certain rotational zone with a recess 11 as well as with an eccentric surface 12 in another rotational zone of the quick coupling means. In a certain rotational position of quick coupling means 9 (see fig. 1), said connecting means 21 and hitching means 2 can be threaded in an overlapping position past said quick coupling means 9.

Upon rotating the quick coupling means 9 in the direction of an arrow 24 in fig. 4, the eccentric surface 12 engages with hitching means 2 in a groove 13 extending transversely to its longitudinal axis 23, said groove preferably comprising a section of a circular cylinder.

The relative positioning and dimensioning of quick coupling means 9 rotatably journalled to connecting means 21 and groove 13 included in hitching means 2 are arranged in a manner that tightening of quick coupling means 9 produces between hook member 1 and hitching means 2 a force action substantially parallel to a straight line 25 (fig. 4). Thus, there is produced between pulling hook 1 and hitching means 2 both an axial force, i.e. parallel to axis 23, and a force acting orthogonally thereto.

Said axial force presses a conical surface 7 provided in the mouth of connecting means 21 of hook member 1 against a conical surface 8 provided in the base of a protrusion 22, included in hitching means 2 and extending into the interior of connecting means 21, said surfaces 7, 8 locking the pulling hook and hitching means 2 relative to each other. In order to secure the locking, a radial component force produced by quick coupling means 9 presses a section of wall surface 6 included in the end of the cylindrical protrusion 22 of hitching means 2 against a wall surface section 5 of a hole included in connecting means 21 for said protrusion 22.

The quick coupling means 9 is fitted with an externally adjustable element, preferably a lever 19 mounted transversely and non-rotatably relative to quick coupling means 9, for setting said quick coupling means 9 in a desired rotational position.

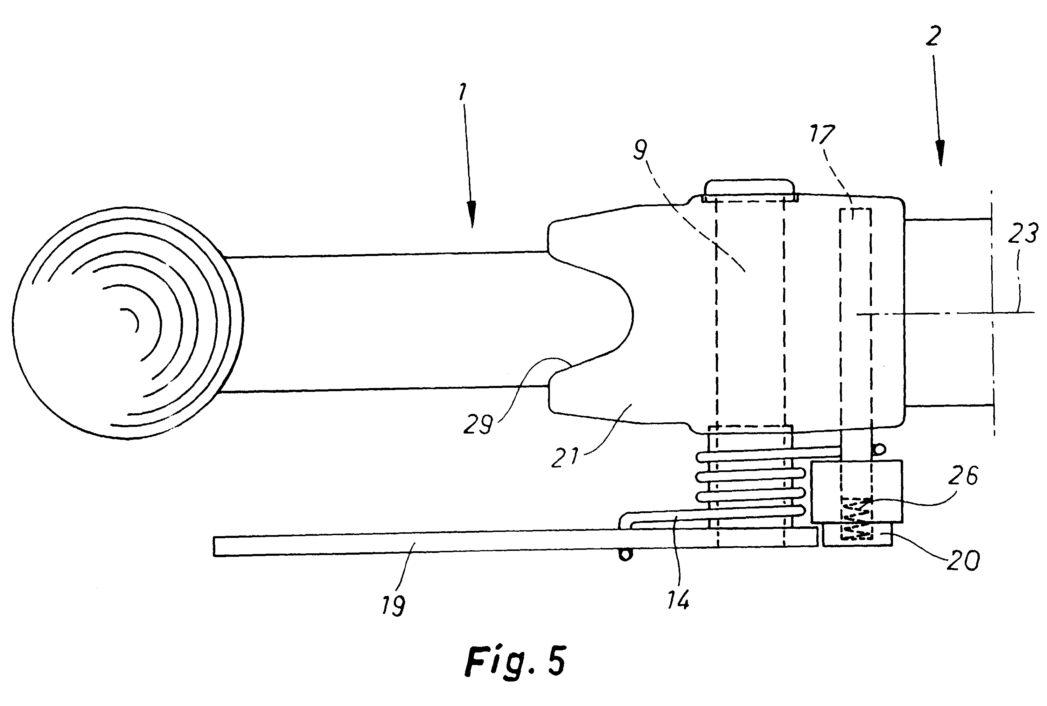

The quick coupling means 9 is fitted with a spring 14 in a manner that, as a result of the spring force, said quick coupling means 9 always tends to rotate to a position in which the eccentric surface 12 of the quick coupling means locks or clamps hitching means 2 and hook member 1 relative to each other. In the exemplary embodiment shown in fig. 5, said spring 14 is adapted to rotate lever 19 in a manner that the quick coupling means 9 always urges towards its locking position.

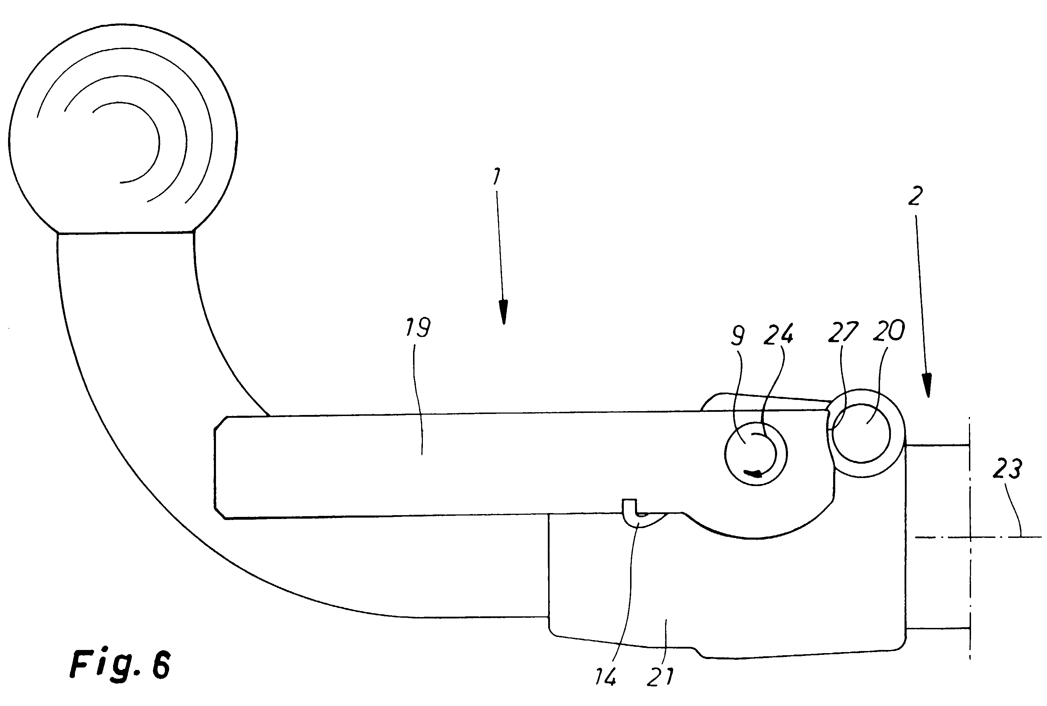

Lever 19 is mounted on quick coupling means 9 with hook member 1 and hitching means 2 fitted to each other and the quick coupling means rotated to its locking position, whereby said lever 19 is preferably mounted in a manner that, as the pulling hook is in a locking position and secured to a vehicle, lever 19 is horizontal and directed backwards, as shown in figs. 5 and 6. Thus, the quick coupling means 9 is set in an unlocking position by pressing lever 19 downwards. By not effecting the locking of lever 19 to quick coupling means 9 until at the above-mentioned assembly stage, it is possible to acquire a desired position for lever 19 regardless of manufacturing tolerances.

Lever 19 is provided with a locking means 20 for preventing the accidental uncoupling of quick coupling means 9, e.g. in the case of spring 14 being broken. In the solution illustrated in fig. 5, the locking means 20 comprises a member fixed in an axially resilient fashion to the end of a rod 17 projecting from connecting means 21 in the direction parallel to quick coupling means 9, said member being adapted in its extended position to secure said lever 19 mounted on the end of quick coupling means 9 and, respectively, in its retracted position to release the same. The locking means 20 is provided with a spring 26 in a manner that said locking means 20 always urges towards its extended position shown in fig. 5. When lever 19 is in the horizontal position shown in figs. 5 and 6 and quick coupling means 9 is in its respective locking position, the locking means 20 extends to a recess 27 provided in the end of lever 19, said recess being of such a shape that the locking means 20 only allows the rotation of lever 19 just slightly above or below the horizontal plane.

In order to prevent the possible failure of quick coupling means 9 from resulting in the disengagement of hook member 1, the overlapping portions of hook member 1 and hitching means 2 are further provided with second abutting faces 15, 16 (see figs. 1, 2 and 4) for limiting the relative movement of elements 1, 2 with the pulling hook in its normal operative position. The abutting faces 15, 16 comprise a grooved surface 16, provided in hitching means 2 and surrounding its circumferential surface, and an abutment surface 15, included in a safety element 17 fixed relative to hook member 1 and capable of engaging said grooved surface upon rotating said hook member 1 relative to hitching means 2.

In the exemplary embodiment shown in the drawings, the safety element 17 comprises a circular rod which is fitted in connecting means 21 orthogonally relative to centre axis 23 in such a manner that the cylindrical envelope surface of said rod extends partially inside the wall section of a hole included in connecting means 21 for hitching means 22. The end of hitching means 2 is provided with a flat bevelling 18 in a manner that, in a certain rotational position, the end of hook member 1 can be pushed on top of hitching means 2 for bringing said second abutting faces 15, 16 against each other.

In the embodiment shown in fig. 4, the connecting means 21 and hitching means 2 of hook member 1 can only be fitted in an overlapping position when the knobbed end of hook member 1 is turned 90° upwards from the plane shown in the figure. In other positions, the safety rod 17 prevents the overlapping insertion of components 21 and 2 or, alternatively, the separation thereof from each other.

In practice, the disengagement of hook member 1 from a vehicle is effected as follows.

The locking means 20 is pressed in to release lever 19, which can be turned down and further below an automobile - with lever 19 turned down, locking means 20 is no longer capable of rising - until said quick coupling means 9 reaches the position shown in fig. 1. At this point, the extraction of pulling hook 1 is still prevented by safety element 17, whose action can be by-passed by turning, in the solution shown in fig. 4, the knobbed end of a pulling hook to point ot the right as seen from behind a vehicle. Thereafter, the hook can be extracted, the action of the force of spring 14 can be allowed to return lever 19 to its locking position, wherein the locking means 20 reprojects to lock said lever 19, and said hook member 1 can be placed e.g. in the trunk of an automobile.

The hitching of hook member 1 is effected in a substantially identical manner in reversed order.

## Claims

1. A pulling hook for pulling caravans, trailers or the like, said pulling hook being provided with locking means for fastening an actual hook member (1) removably to a pulling hook hitching means (2), which is in turn secured to a pulling vehicle, whereby a connecting means (21) for actual hook member (1) is adapted to at least partially overlap said hitching means (2), the overlapping components (21, 2) of hook member (1) and hitching means (2) being provided with abutting faces (5, 6, 7, 8) for limiting the relative movement of said components, and also provided is a quick coupling means (9) for bringing the abutting faces (5, 6, 7, 8) of overlapping components (21, 2) to press against each other and for bringing said overlapping components (21, 2) to lock removably relative to each other, said quick coupling means (9) comprising an axle stub, journalled to be rotatable transversely relative to the common centre axis (23) of connecting means (21) and hitching means (2) and provided in alignment with said axis (23) in a certain rotational zone of quick coupling means (9) with a recess (11) as well as in another rotational zone of the quick coupling means with an eccentric surface (12) whereby, in a certain rotational position of quick coupling means (9), said connecting means (21) and hitching means (2) can be threaded in an overlapping position past said quick coupling means (9), whereafter, upon rotating the quick coupling means, said abutting faces (5, 6, 7, 8) of the connecting means (21) and hitching means (2) of hook member (1) are pressed against each other for locking said components (21, 2) relative to each other, **characterized** in that said quick coupling means (9) is journalled to the connecting means (21) of hook member (1), that said hitching means (2) is provided with a groove (13), extending transversely relative to its longitudinal axis (23) and intended for the eccentric surface (12) of quick coupling means (9), said groove preferably comprising a section of a circular cylinder, that the abutting faces of hook member (1) comprise a conical surface (7) provided in the mouth of a hole included in connecting means (21) and intended for hitching means (2) and a wall surface section (5) of said hole and, respectively, the matching abutting faces of hitching means (2) comprise a conical surface (8) provided in the base of a protrusion (22) included in hitching means (2) and extending into the interior of connecting means (21) and a section of the wall surface (6) of said protrusion (22), and that the relative positioning and dimensioning of quick coupling means (9) and groove (13) are arranged in a manner that tightening of said quick coupling means (9) produces on hook member (1) a force capable of pressing the abutting faces (5, 7) of hook member (1) against the respective abutting faces (6, 8) of hitching means (2).

2. A pulling hook as set forth in claim 1, **characterized** in that said quick coupling means (9) is provided with a spring (14) in a manner that, through the action of a spring force, the coupling means (9) always tends to rotate to a position in which the eccentric surface (12) of the quick coupling means locks hitching means (2) and hook member (1) relative to each other.

3. A pulling hook as set forth in claim 1 or 2, **characterized** in that the overlapping portions of hook member (1) and hitching means (2) are further provided with second abutting faces (15, 16) for further limiting the relative movement of components (1, 2), said abutting faces comprising a grooved surface (16), provided in hitching means (2) and extending around its circumferential surface, and an abutment surface (15), included in a safety element (17) stationary relative to hook member (1) and capable of engaging said grooved surface upon rotating said hook member (1) relative to hitching means (2), and that the end of hitching means (2) is provided with a bevelling (18) in a manner that, in a certain rotational position, the end of hook member (1) can be pushed on top of hitching means (2) for bringing said second abutting faces (15, 16) against each other.

4. A pulling hook as set forth in any of preceding claims 1-3, **characterized** in that said quick coupling means (9) is provided with an externally adjustable element (19) for setting the quick coupling means (9) in a desired rotational position.

5. A pulling hook as set forth in claim 4, **characterized** in that said element (19) comprises a lever mounted transversely and non-rotatably on the end of quick coupling means (9).

6. A pulling hook as set forth in claim 4 or 5, **characterized** in that said element (19) is provided with a locking means (20) for preventing the unintentional uncoupling of quick coupling means (9).

7. A pulling hook as set forth in any of claims 4-6, **characterized** in that said locking means (20) comprises a member, mounted in an axially resilient manner on the end of safety rod (17) and adapted in its extended position to secure said externally adjustable element (19) of quick coupling means (9) and, respectively, in its retracted position to release the same.

8. A pulling hook as set forth in any of claims 4-7, **characterized** in that said lever (19) is mounted on quick coupling means (9) while hook member (1) and connecting means (2) are fitted to each other and locked by the quick coupling means.

## Patentansprüche

1. Zughaken zum Schleppen von Wohnwagen, Anhängern oder dergleichen, mit Verriegelungsmitteln, zum entfernbaren Befestigen eines vorhandenen Hakenelementes (1) an einer Zughaken-Anbauvorrichtung (2), die ihrerseits an einem ziehenden Fahrzeug befestigt ist, wobei ein Verbindungselement (21) für ein vorhandenes Hakenelement (1) derart gestaltet ist, daß es wenigstens teilweise die Anbauvorrichtung (2) überlappt, wobei die überlappenden Bauteile (21, 2) des Hakenelementes (1) und der Anbauvorrichtung (2) mit aneinander anstoßenden Flächen (5, 6, 7, 8) zum Begrenzen der Relativbewegung der genannten Bauteile versehen sind, ferner mit einer Schnellkupplung (9), um die aneinander anstoßenden Flächen (5, 6, 7, 8) der einander überlappenden Bauteile (21, 2) dazu zu bringen, pressend aneinander anzuliegen und die überlappenden Bauteile (21, 2) dazu zu veranlassen, sich relativ zueinander lösbar zu verriegeln, wobei die Schnellkupplung (9) einen axialen Zapfen umfaßt, der derart gelagert ist, daß er relativ zur gemeinsamen Mittelachse (23) des Verbindungselementes (21) und der Anbauvorrichtung (23) quer verdrehbar ist, versehen in Ausrichtung mit der genannten Achse (23) in einer gewissen Drehzone der Schnellkupplung (9) mit einer Aussparung (11) wie auch in einer anderen Drehposition der Schnellkupplung mit einer exzentrischen Fläche (12), wobei das Verbindungselement und die Anbauvorrichtung in einer bestimmten Drehposition der Schnellkupplung (9) in einer überlappenden Position hinter der Schnellkupplung (9) verschraubt werden können, worauf die aneinander anstoßenden Flächen (5, 6, 7, 8) des Verbindungselementes (21) und der Anbauvorrichtung (2) des Hakenelementes (1) bei Verdrehen der Schnellkupplung gegeneinandergepreßt werden, um die gekannten Komponenten (21, 2) relativ zueinander zu verriegeln, dadurch gekennzeichnet, daß die Schnellkupplung (9) am Verbindungselement (21) des Hakenelementes (1) gelagert ist, daß die Anbauvorrichtung (2) mit einer Nut (13) versehen ist, die sich relativ zu ihrer Längsachse (23) quer erstreckt und für die exzentrische Fläche (12) der Schnellkupplung (9) vorgesehen ist, und die vorzugsweise einen kreiszylindrischen Abschnitt aufweist, daß die aneinander anstoßenden Flächen des Hakenelementes eine konische Fläche (7) aufweisen, die im Mundstück einer Bohrung vorgesehen ist, eingeschlossen im Verbindungselement (21) und für die Anbauvorrichtung (2) bestimmt, bzw. einen Wandflächenabschnitt (5) der genannten Bohrung, wobei die miteinander zusammenpassenden, aneinander anstoßenden Flächen der Anbauvorrichtung (2) eine konische Fläche (9) aufweisen, die in der Basis eines Vorsprunges (22) enthalten ist, der in der Anbauvorrichtung (2) enthalten ist und sich in das Innere des Verbindungselementes (21) erstreckt, ferner einen Abschnitt der Wandfläche (6) des genannten Vorsprunges (22), und daß die relative Positionierung und Bemessung der Schnellkupplung (9) und der Nut (13) derart gewählt sind, daß das Anziehen der Schnellkupplung (9) auf das Hakenelement (1) eine Kraft ausübt, die dazu in der Lage ist, die aneinander anstoßenden Flächen (5, 7) des Hakenelementes (1) gegen die entsprechenden, aneinander anstoßenden Flächen (6, 8) der Anbauvorrichtung (2) anzupressen.

2. Zughaken nach Anspruch 1, dadurch gekennzeichnet, daß die Schnellkupplung (9) mit einer Feder (14) derart versehen ist, daß die Schnellkupplung (9) aufgrund der Wirkung der Federkraft stets dazu neigt, in eine Position verdreht zu werden, in welcher die exzentrische Fläche (12) der Schnellkupplung die Anbauvorrichtung (2) und das Hakenelement (1) relativ zueinander verriegelt.

3. Zughaken nach Anspruch 1 oder 2, dadurch gekennzeichnet, daß die einander überlappenden Teile des Hakenelementes (1) und der Anbauvorrichtung (2) weiterhin mit zweiten aneinander anstoßenden Flächen (15, 16) zur weiteren Begrenzung der Relativbewegung der Komponenten (1, 2) versehen sind, und daß die aneinander anstoßenden Flächen eine genutete Fläche (16) umfassen, die an der Anbauvorrichtung (2) vorgesehen ist und sich um die Umfangsfläche herum erstreckt, sowie eine Anschlagfläche (15), die in einem Sicherheitselement (17) eingeschlossen ist, das relativ zum Hakenelement (1) stationär ist und das bei Verdrehen des Hakenelementes (1) relativ zur Anbauvorrichtung (2) in die genutete Fläche einzugreifen vermag, und daß das Ende der Anbauvorrichtung (2) mit einer Anfasung (18) versehen ist, derart, daß das Ende des Hakenelementes (1) in einer gewissen Drehposition in die Anbauvorrichtung (2) verschoben werden kann, um die genannten zweiten aneinander anstoßenden Flächen (15, 16) zum gegenseitigen Anschlag zu bringen.

4. Zughaken nach einem der vorausgegangenen Ansprüche 1 bis 3, dadurch gekennzeichnet, daß die Schnellkupplung (9) mit einem extern justierbaren Element (19) versehen ist, um sie in einer gewünschten Drehposition einzustellen.

5. Zughaken nach Anspruch 4, dadurch gekennzeichnet, daß das genannte Element (19) einen Hebel aufweist, der quer und nicht rotierbar am Ende der Schnellkupplung (9) gelagert ist.

6. Zughaken nach Anspruch 4 oder 5, dadurch gekennzeichnet, daß das genannte Element (19) mit einer Verriegelungsvorrichtung (20) zum Verhindern eines unbeabsichtigten Abkoppelns der Schnellkupplung (9) versehen ist.

7. Zughaken nach einem der Ansprüche 4 bis 6, dadurch gekennzeichnet, daß die Verriegelungsvorrichtung (20) ein Element umfaßt, das auf axial elastische Weise am Ende des Sicherheitsstabes (17) gelagert und in seiner ausgefahrenen Position derart gestaltet ist, daß es das genannte extern justierbare Element (19) der Schnellkupplung (9) sichert bzw. in seiner zurückgefahrenen Position freigibt.

8. Zughaken nach einem der Ansprüche 4 bis 7, dadurch gekennzeichnet, daß der Hebel (19) an der Schnellkupplung (9) montiert ist, während das Hakenelement (1) und das Verbindungselement (2) aneinander montiert und mittels der Schnellkupplung verriegelt sind.

## Revendications

1. Crochet de tirage pour tirer des caravanes, des remorques ou similaires, ledit crochet de tirage étant pourvu de moyens de verrouillage pour attacher un élément de crochet réel (1) de manière amovible à des moyens d'attelage (2) de crochet de tirage, qui sont à leur tour fixés à un véhicule de tirage, de telle manière que des moyens de liaison (21) pour l'élément de crochet réel (1) soient adaptés pour chevaucher au moins partiellement lesdits moyens d'attelage (2), les composants de chevauchement (21, 2) de l'élément de crochet (1) et des moyens d'attelage (2) étant pourvus de faces jointives (5, 6, 7, 8) pour limiter le mouvement relatif desdits composants, et sont également prévus des moyens de couplage rapide (9) pour amener les faces jointives (5, 6, 7, 8) des composants de chevauchement (21, 2) à se presser les unes contre les autres et pour amener lesdits composants de chevauchement (21, 2) à se verrouiller de manière amovible les uns par rapport aux autres, lesdits moyens de couplage rapide (9) comprenant un tourillon, tourillonné pour être rotatif transversalement par rapport à l'axe central commun (23) des moyens de liaison (21) et des moyens d'attelage (2) et prévu en alignement avec ledit axe (23) dans une certaine zone de rotation des moyens de couplage rapide (9) avec un renfoncement (11) ainsi que dans une autre zone de rotation des moyens de couplage rapide avec une surface excentrique (12) de telle manière que, dans une certaine position de rotation des moyens de couplage rapide (9), lesdits moyens de liaison (21) et les moyens d'attelage (2) puissent être enfilés dans une position de chevauchement au-delà desdits moyens de couplage rapide (9), après quoi, sur mise en rotation des moyens de couplage rapide, lesdites faces jointives (5, 6, 7, 8) des moyens de liaison (21) et des moyens d'attelage (2) de l'élément de crochet (1) sont pressées les unes contre les autres pour verrouiller lesdits composants (21, 2) les uns par rapport aux autres, caractérisé en ce que lesdits moyens de couplage rapide (9) sont tourillonnés aux moyens de liaison (21) de l'élément de crochet (1), en ce que lesdits moyens d'attelage (2) sont pourvus d'une rainure (13), s'étendant transversalement par rapport à son axe longitudinal (23) et destinée à la surface excentrique (12) des moyens de couplage rapide (9), ladite rainure comprenant de préférence une section en cylindre circulaire, en ce que les faces jointives de l'élément de crochet (1) comprennent une surface conique (7) prévue dans l'orifice d'un trou compris dans les moyens de liaison (21) et destinée aux moyens d'attelage (2) et une section de surface de paroi (5) dudit trou et, respectivement, les faces jointives correspondantes des moyens d'attelage (2) comprennent une surface conique (8) prévue dans la base d'une saillie (22) comprise dans les moyens d'attelage (2) et s'étendant dans l'intérieur des moyens de liaison (21) et une section de la surface de paroi (6) de ladite saillie (22), et en ce que le positionnement et le dimensionnement relatifs des moyens de couplage rapide (9) et de la rainure (13) sont agencés de manière à ce que le serrage desdits moyens de couplage rapide (9) produise sur l'élément de crochet (1) une force capable de presser les faces jointives (5, 7) de l'élément de crochet (1) contre les faces jointives respectives (6, 8) des moyens d'attelage (2).

2. Crochet de tirage selon la revendication 1, caractérisé en ce que lesdits moyens de couplage rapide (9) sont pourvus d'un ressort (14) de manière à ce que, par l'action d'une force de ressort, les moyens de couplage (9) tendent toujours à tourner vers une position dans laquelle la surface excentrique (12) des moyens de couplage rapide verrouille les moyens d'attelage (2) et l'élément de crochet (1) les uns par rapport aux autres.

3. Crochet de tirage selon la revendication 1 ou 2, caractérisé en ce que les parties de chevauchement de l'élément de crochet (1) et des moyens d'attelage (2) sont de plus pourvues de secondes faces jointives (15, 16) pour limiter davantage le mouvement relatif des composants (1, 2), lesdites faces jointives comprenant une surface à gorge (16), prévue dans les moyens d'attelage (2) et s'étendant autour de leur surface circonférentielle, et une surface de butée (15), comprise dans un élément de sécurité (17) fixe par rapport à l'élément de crochet (1) et capable de se mettre en prise avec ladite surface à gorge sur rotation dudit élément de crochet (1) par rapport aux moyens d'attelage (2), et en ce que l'extrémité des moyens d'attelage (2) est pourvue d'un biseau (18) de manière à ce que, dans une certaine position de rotation, l'extrémité de l'élément de crochet (1) puisse être poussée au-dessus des moyens d'attelage (2) pour amener lesdites secondes faces jointives (15, 16) l'une contre l'autre.

4. Crochet de tirage selon l'une quelconque des revendications précédentes 1 à 3, caractérisé en ce que lesdits moyens de couplage rapide (9) sont pourvus d'un élément réglable extérieurement (19) pour régler les moyens de couplage rapide (9) dans une position de rotation souhaitée.

5. Crochet de tirage selon la revendication 4, caractérisé en ce que ledit élément (19) comprend un levier monté transversalement et de manière non rotative sur l'extrémité des moyens de couplage rapide (9).

6. Crochet de tirage selon la revendication 4 ou 5, caractérisé en ce que ledit élément (19) est pourvu de moyens de verrouillage (20) pour empêcher le décrochement involontaire des moyens de couplage rapide (9).

7. Crochet de tirage selon l'une quelconque des revendications 4 à 6, caractérisé en ce que lesdits moyens de verrouillage (20) comprennent un élément, monté de façon élastique axialement sur l'extrémité de la tige de sécurité (17) et adapté, dans sa position étendue, pour fixer ledit élément réglable extérieurement (19) des moyens de couplage rapide (9) et, dans sa position rétractée, pour libérer le susdit, respectivement.

8. Crochet de tirage selon l'une quelconque des revendications 4 à 7, caractérisé en ce que ledit levier (19) est monté sur les moyens de couplage rapide (9) tandis que l'élément de crochet (1) et les moyens de liaison (2) sont assemblés l'un avec l'autre et verrouillés par les moyens de couplage rapide.
